# FASCICULE DE BREVET EUROPEEN

(11) **EP 0 689 771 B1**
(45) Date de publication et mention de la délivrance du brevet: **09.08.2000**
(21) Numéro de dépôt: 95401256.3
(22) Date de dépôt: 31.05.1995
(51) Int. Cl.: A23L 1/20, A23L 1/211, A23L 1/0526

(54) **Fraction de germe de caroube à haute teneur en protéine**
Johannisbrotkeimfraktion mit hohem Proteingehalt
High-protein carob germ fraction

(30) Priorité: 03.06.1994 FR 9406803
(43) Date de publication de la demande: 03.01.1996
(73) Titulaire: Meyhall AG, 8280 Kreuzlingen (CH)
(72) Inventeur: Klinger, Josef, CH-8274 Tagerwilen (CH); Sprenger, Max, CH-9220 Bischofslell (CH)
(74) Mandataire: Seugnet, Jean Louis

(56) Documents cités:
- GB-A- 2 153 201

## Description

La présente invention vise la mise au point d'une fraction traitée termiquement du germe de la graine de caroube, à très haute teneur en protéines, et susceptible d'être employée dans l'alimentation humaine.

Les goûts actuels des consommateurs s'orientent de plus en plus vers une alimentation à faible teneur en matières grasses. Dans ce but, il a été développé, dans les 20 dernières années, une grande variété de produits de consommation courante à base d'émulsions directes ou inverses de type margarines, sauces salades, mayonnaises.... dans lesquelles la concentration en matières grasses est considérablement réduite au profit de celle de l'eau. Ceci a impliqué le développement en parallèle de systèmes stabilisants et/ou émulsionnants aptes à conférer la stabilité requise à ces émulsions.

Parmi les agents émulsionnants classiquement mis en oeuvre, on peut plus particulièrement citer les extraits protéidiques de l'oeuf, les caséinates de sodium et les laits écrémés en poudre.

Tous ces agents se caractérisent par une teneur élevée en protéine qui vraisemblablement améliore leur comportement émulsifiant. Pour cette raison leur utilisation est très courante.

Ceci a conduit au développement plus récent de nouveaux agents émulsifiants, d'origine non animale et de comportement émulsifiant équivalent voire supérieur.

L'objet de la présente invention est précisément de proposer une nouvelle composition, d'origine non animale, de faible coût, de saveur douce et possédant une teneur en protéines telle qu'elle lui confère des propriétés émulsifiantes performantes.

Plus particulièrement, la présente invention propose une fraction (ou concentré) de germe de graine de caroube qui de manière inattendue s'est avéré satisfaire à l'ensemble de ces exigences.

L'arbre de caroube produit un fruit. Ce fruit est constitué de deux parties, la cosse et la graine. La graine de caroube, et plus particulièrement la fraction endosperme de cette graine, est déjà largement valorisée dans l'industrie alimentaire sous la dénomination "gomme de caroube". Contigu à cette fraction endosperme, se trouve le germe qui est un sous-produit obtenu en quantités importantes lors de l'isolement de la gomme de caroube. Ce germe possède en effet une teneur élevée en inhibiteur de protéases (telle que la trypsine). Cette teneur élevée peut soulever d'importants problèmes nutritionnels et s'oppose donc à une utilisation généralisée de ce composé en alimentation humaine. Un autre point qui pose problème dans les utilisations possibles de germe de caroube, généralement sous la forme de poudre, est la haute teneur en eau de cette poudre qui la rend très vulnérable au rancissement et donc limite considérablement sa stabilité au stockage. Ces deux points sont donc préjudiciables à la valorisation de la farine de germe de caroube. Or ce germe possède une concentration en protéines considérable susceptible d'être valorisée en tant que protéine fonctionnelle.
Les difficultés rencontrées et résolues selon la présente invention se posent également au niveau de la préservation de la haute teneur en protéines lors dudit traitement du germe. La diminution de la teneur en inhibiteurs de protéases et la réduction de la teneur en eau du germe ne doivent pas être réalisées au détriment de la teneur en protéine.

La présente invention vise donc une fraction de germe de caroube qui ne présente pas les inconvénients ci-dessus, et qui soit approprié à sa valorisation dans l'industrie alimentaire. La présente invention vise également la mise au point d'un procédé de traitement du germe de caroube conduisant à une fraction de germe ayant les propriétés visées.

La présente invention concerne en effet une fraction de germe de caroube à teneur élevée en protéines, caractérisée en ce qu'elle présente une teneur en inhibiteur de protéases réduite d'au moins 75 %, de préférence d'au moins 85 %, par rapport à sa teneur naturelle initiale, une teneur en eau inférieure à 5 % de préférence inférieure à 4 % et une teneur en protéines au moins égale à 50 %, de préférence au moins égale à 55 %, par rapport au poids total de la fraction.

La présente invention concerne également un procédé de préparation d'une fraction de germe de caroube à teneur élevée en protéine, caractérisé en ce qu'il met en oeuvre un traitement de germes de graines de caroube, lesdites graines étant préalablement débarrassées de leurs fractions endospermes, ledit traitement des germes permettant de diminuer leur teneur en inhibiteur de protéase et leur teneur en eau aux valeurs désirées et en ce qu'il conduit à une fraction (ou concentré) de germes de caroube consommable présentant une teneur en protéines au moins égale à 50 %, de préférence 55% en poids/poids.

Selon un mode particulier de mise en oeuvre de l'invention, le germe est traité thermiquement à une température comprise entre environ 180 et 210 C° par de l'air sec. On peut également utiliser un four à micro-ondes.

Plus basse est la température du traitement thermique et plus longue sera la durée de ce traitement. Il est par exemple de 4-8 minutes à 205 °C.

Le germe peut être traité thermiquement tel quel ou après avoir été broyé sous forme d'une poudre. On recommande de broyer le germe après son traitement thermique.
La teneur en humidité des germes de caroube traités doit être inférieure ou égale à 5 %, de préférence inférieure ou égale à 4 %, pour éviter que les matieres grasses ou huileuses rancissent durant un temps de stockage habituellement utilisé (au moins quelques mois et généralement inférieur à 3 ans).

De manière inattendue, le concentré de germe de caroube obtenu au terme du procédé selon l'invention s'est avéré doté de propriétés émulsifiantes comparables et même supérieures, dans certains cas, à celles des additifs classiques discutés précédemment.

Outre les protéines, la fraction de germe de caroube selon l'invention contient majoritairement des composants lipidiques et des carbohydrates. La teneur en lipides varie entre 5 et 10% en poids. Quant aux carbohydrates leur quantités fluctuent entre 20 et 30% en poids. La fraction de germe de caroube selon l'invention peut être employée seule ou en mélange avec un ou plusieurs autres agents émulsifiants classiques pour stabiliser et/ou émulsionner des émulsions inverses ou directes ou encore des mousses.

En ce qui concerne les émulsions ou mousses incorporant ledit extrait selon l'invention, il peut s'agir indifféremment d'émulsions développées dans les industries alimentaires.

Bien entendu, la quantité de fraction de germe incorporée dans l'émulsion ou la mousse est fonction de la nature des éléments les constituant et de l'émulsion recherchée. Il est à la portée de l'homme de l'art d'apprécier la quantité convenable et correspondante de fraction à mettre en oeuvre.

Outre son pouvoir émulsifiant performant, l'extrait de germe de caroube confère avantageusement à l'émulsion des qualités de texture approchantes de celles d'un corps gras. Ceci est un atout important aux yeux du consommateur qui cherche à trouver, au niveau du goût et de la texture des aliments allégés qu'il consomme, les qualités organoleptiques du produit d'origine c'est à dire non allégé.

La présente invention se rapporte également à l'utilisation en généralde la fraction de germe de caroube selon l'invention, et, plus particulièrement, à son usage à titre d'agent stabilisant et/ou émulsifiant dans des émulsions directes ou inverses et des mousses alimentaires, plus particulièrement dans les mayonnaises, les margarines, les pâtes à tartiner et les sauces salades.
A titre indicatif, une émulsion de ce type peut comporter de 0,5 - 1,5 parties en poids de fraction selon l'invention pour 100 parties en poids de phases grasses mises en oeuvre.

Sauf indications contraires, les parties et pourcentages sont en poids.

### EXEMPLE 1

### Procédé de préparation d'une fraction de germe de caroube.

Des cosses de graines de caroube sont carbonisées par de l'acide sulfurique à température élevée et les cosses traitées sont ensuite neutralisées. Les endospermes et les germes sont séparés par des moyens méchaniques et le germe est traité à 205 °C pendant 6 minutes dans un four à air chaud et est ensuite refroidi à température ambiante, broyé, tamisé et emballé.

Selon ce procédé on obtient 20 % de germe de caroube, basés sur le poids de la graine, enrichi en protéine.

La caractérisation chimique de cette fraction montre qu'elle est constituée de:

| | % en poids (germe traité) | % en poids (germe non traité) |
|---|---|---|
| eau | 4 | 7-9 |
| protéines | 56 | 50-52 |
| lipides | 7,2 | 6-8 |
| carbohydrates | 26,2 | 25-27 |
| cendres | 6,6 | 6-7 |

### EXEMPLE 2

Comparaison du pouvoir émulsifiant d'une fraction de germe de caroube préparée selon le mode opératoire de l'exemple 1 avec ceux d'agents émulsifiants classiques.
Le pouvoir émulsifiant de la fraction de germe est évaluée selon la méthode décrite par J. E. Kinsella (J. Am. Oil Chemists Soc.56 : 242- ; 1979) et est comparée à celle d'autres protéines.

Les résultats sont rassemblés dans le tableau 1 ci-après.

**TABLEAU I**

| AGENT EMULSIFIANT TESTE | POUVOIR EMULSIFIANT (g d'agent émulsifiant/100g d'huile) |
|---|---|
| protéines de jaune d'oeufs | 2,5 |
| caséinates de sodium | 0,5 |
| lait écrémé en poudre | 0,75 |
| solides déminéralisés | 0,7 |
| extrait de germe de graine de caroube | 0,75 |

Comme on peut le voir du tableau I ci-dessus la fraction de germe de graine de caroube a un pouvoir émulsifiant similaire à celui du lait écrémé en poudre.

### EXEMPLE 3

Formulations d'émulsions alimentaires incorporant une fraction de germe de graine de caroube préparée selon le mode opératoire de l'exemple 1.

| Formulation d'une mayonnaise (procédé à chaud) | |
|---|---|
| COMPOSITION | QUANTITES % en poids |
| eau | 35,4 |
| sucre | 3,0 |
| amidon + protéines végétales + gomme de caroube/gomme guar | 3,46 |
| extrait de germe de caroube | 0,14 |
| huile | 50,00 |
| vinaigre 10° | 5,0 |
| moutarde | 2,0 |
| sel | 1,0 |
| | 100 |

La mayonnaise est préparée comme suit:
Au prémix contenant l'amidon, les protéines végétales, les gommes de caroube et de guar, on ajoute le sucre, le système stabilisant et la fraction de germe de caroube. On chauffe à 85 °C pendant au moins 1 mn et on ajoute l'huile, l'émulsifiant, le vinaigre et la moutarde et on passe le mélange 1 ou 2 mn dans un broyeur à colloÏdes.
La mayonnaise stabilisée par un extrait de germe de caroube selon l'invention possède une texture crémeuse et non collante tout à fait assimilable à la texture d'une mayonnaise artisanale.

| Formulation d'une pâte à tartiner allégée. | |
|---|---|
| COMPOSITION | QUANTITE % en poids |
| eau | 59,605 |
| mélange d'huiles végétales | 37,000 |
| émulsifiants (E 471/E474 : 7/3 en poids) | 1,000 |
| acide lactique à 50% | 0,300 |
| sorbate de potassium | 0,150 |
| sel | 1,000 |
| édulcorant | 0,040 |
| béta-carotène | 0,005 |
| gomme guar/gomme xanthane + protéines végétales | 0,7 |
| fraction de germe de caroube de l'exemple 1 | 0,2 |
| E 471 : mono- et diglycérides d'acides gras alimentaires E 472 : mono- et diglycérides d'acides gras alimentaires estérifiés avec l'un des acides suivants : acétique, lactique, citrique, tartrique, mono-acétyl tartrique et diacétyl tartrique. | |

Pour préparer cette pâte à tartiner on procède comme suit :
On prépare 2 fractions : une première fraction huileuse comprenant le mélange gras végétale, les émulsifiants, le carotène, le beurre et l'arôme et une deuxième fraction soluble dans l'eau contenant les autres ingrédients.
Les matières grasses sont fondues au bain marie à 70°C, puis mélangées.
La phase aqueuse contenant des composants annexes en solution et éventuellement des stabilisants en dispersion, est également maintenue à 80°C sous agitation pendant au moins 10 minutes.
La phase aqueuse est ensuite lentement additionnée (30 minutes environ) sous agitation forte à la phase grasse.
Lorsque l'émulsion est achevée, elle est passée sur un échangeur à surface raclée à une température de 25-30°C, puis 6 à 4°C.
Il est important de refroidir brusquement (trepe thermique) pour inverser les phases.

Comparativement à une formulation de pâte à tartiner n'incorporant pas de fraction de germe de caroube selon l'invention, la composition comportant cette fraction possède un meilleur goût en bouche et est plus facilement tartinable.

## Revendications

1. Fraction de germe de caroube à teneur élevée en protéines, caractérisée en ce qu'elle présente une teneur en inhibiteur de protéases réduite d'au moins 75 %, de préférence d'au moins 85 %, par rapport à sa teneur naturelle initiale, une teneur en eau inférieure à 5 % de préférence inférieure à 4 %, et une teneur en protéines au moins égale à 50 %, de préférence au moins égale à 55 %, par rapport au poids total de la fraction.

2. Procédé de préparation d'une fraction de germe de caroube telle que définie à la revendication 1, caractérisé en ce qu'il comporte un traitement thermique de germes de graines de caroube, à une température et pendant une durée adaptées de manière à obtenir por lesdits germes traités, la diminution de leur teneur en inhibiteur de protéases, la réduction de la teneur en eau et la teneur en protéines désirées.

3. Procédé selon la revendication 2, caractérisé en ce que les germes sont traités entre environ 180 et 210 °C par de l'air sec ou par un four à micro-ondes.

4. Fraction de germe de caroube susceptible d'être obtenue par la mise en oeuvre d'un procédé tel que défini à la revendication 2 ou 3.

5. Utilisation d'une fraction de germe de germe de caroube tel que définie à la revendication 1 ou 4 en industrie alimentaire.

6. Utilisation selon la revendication 5, dans les émulsions à la dose de 0,5 à 1,5 partie en poids pour 100 parties en poids de phases grasses utilisées.

7. Utilisation selon les revendications 5 ou 6, dans les mayonnaises, margarines, pâtes à tartiner et sauces salades.

## Patentansprüche

1. Johannisbrotkeimfraktion mit einem hohen Gehalt an Proteinen, dadurch gekennzeichnet, daß sie einen um mindestens 75 %, vorzugsweise um mindestens 85 %, reduzierten Protease-Inhibitorgehalt aufweist, bezogen auf ihren natürlichen Ausgangsgehalt, sowie einen Wassergehalt von weniger als 5 %, vorzugsweise von weniger als 4 %, und einen Proteingehalt von mindestens 50 %, vorzugsweise von mindestens 55 %, bezogen auf das Gesamtgewicht der Fraktion.

2. Verfahren zur Herstellung einer Johannisbrotkeimfraktion nach Anspruch 1, dadurch gekennzeichnet, daß es eine thermische Behandlung der Keime der Johannisbrotsamen umfaßt bei einer Temperatur und während einer Dauer, die so bemessen sind, daß für die genannten behandelten Keime die Verringerung ihres Protease-Inhibitorgehalts, des Wassergehaltes und Gehaltes an den gewünschten Proteinen erreicht wird.

3. Verfahren nach Anspruch 2, dadurch gekennzeichnet, daß die Keime zwischen ungefähr 180 und 210 °C mit trockener Luft oder einem Mikrowellenherd behandelt werden.

4. Johannisbrotkeimfraktion, erhältlich durch ein Verfahren nach Anspruch 2 oder 3.

5. Verwendung einer Keimfraktion aus Johannisbrotkeimen nach Anspruch 1 oder 4 in der Nahrungsmittelindustrie.

6. Verwendung nach Anspruch 5 in Emulsionen in einer Menge von 0,5 bis 1,5 Gewichtsteilen pro 100 Gewichtsteile der verwendeten Fettphasen.

7. Verwendung nach Anspruch 5 oder 6 in Mayonnaisen, Margarinen, Brotaufstrichen und Salatsoßen.

## Claims

1. High-protein carob germ fraction, characterized in that it has a content of protease inhibitor reduced by at least 75 %, preferably by at least 85 %, relative to its initial natural content, a water content of less than 5 %, preferably of less than 4 % and a protein content at least equal to 50 %, preferably at least equal to 55 %, relative to the total weight of the fraction.

2. Process for preparing a carob germ fraction as defined in Claim 1, characterized in that it comprises a thermal treatment of carob seed germs, at a suitable temperature and for a suitable period so as to obtain for the said treated germs, the decrease in their protease inhibitor content, the reduction in the water content and the content of desired proteins.

3. Process according to Claim 2, characterized in that the germs are treated at between about 180 and 210°C with dry air or by a microwave oven.

4. Carob germ fraction capable of being obtained using a process as defined in Claim 2 or 3.

5. Use of a carob germ fraction as defined in Claim 1 or 4 in the food industry.

6. Use according to Claim 5, in emulsions at the dose of 0.5 to 1.5 parts by weight per 100 parts by weight of fatty phases used.

7. Use according to Claim 5 or 6, in mayonnaises, margarines, spreads and salad dressings.
